Europäisches Patentamt

European Patent Office

Office européen des brevets

(11) Veröffentlichungsnummer: **0 236 758 B1**

## EUROPÄISCHE PATENTSCHRIFT

(45) Veröffentlichungstag der Patentschrift: **16.10.91**

(21) Anmeldenummer: **87101702.6**

(22) Anmeldetag: **07.02.87**

Die Akte enthält technische Angaben, die nach dem Eingang der Anmeldung eingereicht wurden und die nicht in dieser Patentschrift enthalten sind.

(51) Int. Cl.⁵: **C04B 18/26**, C04B 28/14, //(C04B28/14,14:42,18:26,18:28, 20:00,28:02)

(54) **Bauteile enthaltend Holzspäne, insbesondere Platten aus Gips.**

(30) Priorität: **14.03.86 DE 3608581**

(43) Veröffentlichungstag der Anmeldung: **16.09.87 Patentblatt 87/38**

(45) Bekanntmachung des Hinweises auf die Patenterteilung: **16.10.91 Patentblatt 91/42**

(84) Benannte Vertragsstaaten: **AT BE CH DE ES FR GB GR IT LI LU NL SE**

(56) Entgegenhaltungen:
**AT-B- 175 200
CH-A- 239 957
DE-A- 1 571 466
DE-B- 2 919 311
GB-A- 781 315**

**CHEMICAL ABSTRACTSBand 77, Nr. 6, 7.Aug. 1972, S.133, Abstrakt Nr. 36682c, Columbus, Ohio, US;**

(73) Patentinhaber: **Rigips GmbH
Rühler Strasse
W-3452 Bodenwerder(DE)**

(72) Erfinder: **Rennen, Heinz, Dr.
Junkergrund
W-3452 Bodenwerder(DE)**
Erfinder: **Hilscher, Gerald, Dipl.-Ing.
Schillerstrasse 51
W-3280 Bad Pyrmont(DE)**
Erfinder: **Die anderen Erfinder haben auf ihre Nennung verzichtet**

(74) Vertreter: **Rücker, Wolfgang, Dipl.-Chem. Patentanwalt
Bergiusstrasse 2b
W-3000 Hannover 51(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bauteile, insbesondere Platten aus Gips, sind in den verschiedensten Ausfertigungen zur Verwendung beispielsweise im Hochbau wie bei der Errichtung von Wohnhäusern ein nicht mehr wegzudenkender Werkstoff.

Diese Platten werden mit Kartonummantelung als sogenannte Gipskartonplatten in verschiedenen Stärken und Abmessungen eingesetzt. Sie dienen als Trockenputz, zum Feuerschutz, als Träger von Dämmstoffen gegen Wärme und Schall und sind aufgrund ihrer physikalischen und chemischen Eigenschaften besonders wertvolle Bauteile.

Diese Gipskartonplatten werden mit verschiedenen Zusätzen und in verschiedener Dichte je nach Verwendungszweck hergestellt (Hanusch, "Gipskartonplatten", 1. Auflage, 1978).

Es ist ferner bekannt, Gipsplatten ohne Kartonummantelung in verschiedenen Stärken und Abmessungen mit planen Oberflächen in ähnlicher Weise zu verarbeiten wie Gipskartonplatten.

Sowohl Gipskartonplatten als auch Gipsplatten ohne Kartonummantelung mit plangeschliffenen Oberflächen können, wie bereits ausgeführt, die verschiedensten Zusätze haben. Insbesondere hat man versucht, mechanische Festigkeiten dadurch zu verbessern, daß man faserförmiges Material, sei es aus organischen, sei es aus anorganischen Stoffen, zugesetzt hat (DE-A 15 71 466).

Als Zusätze zu dem die Platte letztlich bildenden Kalziumsulfathalbhydrat wurden vorgeschlagen beispielsweise außer Ton und Rohgips und Kunstharzpulvern Fasern und Späne aller Art. Die Vorstellung, Späne in die Gipsplatten einzuarbeiten, findet ihren Ausdruck auch in einer späteren deutschen Patentanmeldung. nämlich DE-B 29 19 311. in der vorgeschlagen wird, diese Späne mit Wasser zu tränken, so daß das zur Hydratation des Halbhydratgipses erforderliche Anmachwasser auf diese Weise dem Gemenge zugeführt wird, so daß möglichst wenig überschüssiges Wasser vorhanden ist, das, wie bekannt und in jedem Falle lästig, aber notwendig, später durch Trocknen wieder entfernt werden muß.

Während in der erstgenannten DE-A 15 71 466 ganz pauschal von Spänen die Rede ist, ohne anzugeben, welcher Art die Späne sein sollen, ist in der letztgenannten DE-B 29 19 311 die Beimischung von Holzspänen nur noch ein Vehikel, mit dem man das zum Abbinden erforderliche Wasser in das Halbhydratgemenge eintragen will. Auch hier ist von Spänen nicht die Rede hinsichtlich ihrer Natur, ihrer Art, insbesondere ihrer Gestalt und Abmessungen und dergleichen mehr.

Die Gipskartonplatte oder die Gipsplatte ist zwar ein ausgezeichnetes Bauteil mit einer praktisch universellen Verwendung im Innenausbau. jedoch ist sie sowohl herstellungsseitig als auch anwendungsseitig mit gewissen Problemen behaftet, die nicht zuletzt unter Berücksichtigung unserer Umwelt nach Lösungen und seien sie noch so klein verlangen. Das eine Problem ist die große Wassermenge, die bei der Herstellung eines verarbeitbaren Gipsbreies erforderlich ist und die über die tatsächlich zum Abbinden erforderliche Menge hinausgeht und später wieder herausgetrocknet werden muß. wodurch große Mengen Wärme erforderlich sind und beträchtliche Mengen Wasserdampf verschwendet werden. Ein anderes Problem ist die Erreichung einer ausreichenden Festigkeit. was trotz der Hinweise. die in der oben aufgeführten Literatur aufgezählt sind. bisher nicht in jedem Fall erreichbar war. Der Hinweis, dem Gips bzw. dem Gipsbrei Späne zuzumischen, läßt den Fachmann noch mit vielen Fragen allein. Die DE-A 15 71 466 redet lediglich von Spänen schlechthin. Es ist weder angegeben, aus welchen Stoffen diese Späne sein sollen, welche Abmessungen noch welche Form sie haben sollen. Praktisch das gleiche gilt für die DE-B 29 19 311, und wenn man letztere Schrift ausführlich studiert, so tritt das Problem Späne wieder völlig in den Hintergrund, denn sie sind hier zwar etwas deutlicher erwähnt, indem man das Material nennt, aus dem sie bestehen sollen, nämlich aus Holz, aber sie spielen nicht mehr die Rolle der Verbesserung der mechanischen Eigenschaften der Platte, sondern sie treten nur noch als Wasserträger für das abzubindende Halbhydrat in Funktion. Das dürfte sicher auch ein Grund sein, weshalb sich diese Informationen, die mehr als 20 Jahre zurückliegen, bisher in der Praxis nicht durchgesetzt haben.

Die vorliegende Erfindung schlägt nun vor, eine Bauplatte in der Art einer Gipskartonplatte, die aber auch als reine Gipsplatte mit geschliffenen Oberflächen hergestellt werden kann und die die bisherigen Probleme der mechanischen Festigkeiten im wesentlichen löst, so auszubilden, daß den pulverförmigen Kalziumsulfathalbhydrat bis zu

10 % Holzspäne zugesetzt sind, die sich aus

30 bis 40 % in einer Messermühle hergestellte flache Späne und

70 bis 60 % in einer Hammermühle hergestellte flache Späne

zusammensetzen und die trocken untergemischt sind.

Ohne die Zugabe eines Verflüssigers zum Halbhydratgemenge lassen sich etwa 5 bis 6 % dieses Holzspänegemisches ohne Problem untermischen. Mit einem Verflüssiger wie beispielsweise Ligninsulfonat erreicht man Mengen bis zu 10 % und etwas mehr. Der Feuchtigkeitsgehalt der Späne liegt etwa in der Größenordnung von 2 bis 50 Gew.-%, und die Messermühlenspäne, die streifenförmige Gestalt haben, besitzen erfindungsgemäß Abmessungen zwischen 10 und 40 mm, Breiten zwischen 1 und 5 mm und Dicken zwischen 0,2 und 0,5 mm. Die in der Hammermühle hergestellten Flachspäne sind kürzer und plättchenförmiger in ihrer Gestalt mit Längen zwischen 0,2 und 10 mm, Breiten zwischen 0,2 und 1 mm und Dicken von 0,1 bis 0,2 mm.

Es hat sich gezeigt, daß ein Gemisch aus Kalziumsulfathalbhydrat dem erfindungsgemäß zusammengesetzten Holzspänegemisch Anmachwasser mit einem Wasser/Gips/Faktor um 0,60 bis 0,70, Verflüssiger und Schäumer, der bei der Steigerung des Späneanteils in der Gipsmasse entsprechend reduziert wird, anstandslos in Einrichtungen verarbeiten, wie sie zur Herstellung von Gipskartonplatten üblich sind.

Es hat sich bei der Herstellung dieser Platten mit den Holzspänen wie beschrieben gezeigt, daß es für Festigkeit, Verarbeitbarkeit und Verhalten der Masse bei der Herstellung wesentlich auf die Gestalt, auf die Zusammensetzung der Späne ankommt. Gleichmäßig lange Späne sind wenig geeignet, weil sie dazu neigen. sich bei dem Fließ- und Fertigungsgang im Laufe der Herstellung der Gipskartonplatte im überwiegenden Maße in diese Fließrichtung der Fertigung zu orientieren. so daß die Festigkeiten dadurch insbesondere in dieser Richtung nicht den Erwartungen entsprechen.

Es scheint so zu sein, daß das Gemisch der unterschiedlichen Späne hinsichtlich ihres Herstellungsverfahrens bzw. ihrer Gestalt und Abmessungen eine gegenseitige Beeinflussung bewirkt, die, wie bei einem Korngemisch, das entsprechend der Fuller-Kurve hergestellt ist, fungiert.

Die Gipsmasse kann außerdem, bezogen auf den Halbhydratanteil, bei dem es sich in der Regel um Stuckgips handelt, auch einen Anteil an Polyvinylalkohol in Mengen zwischen 0,2 und 0,6 % enthalten und bis zu 40 % des Stuckgipses kann durch Zement ersetzt sein, insbesondere durch einen $C^3A$-haltigen Zement.

In der nachfolgenden Tabelle sind die mechanischen Festigkeitswerte einer herkömmlichen 18 mm dicken Gipskartonplatte mit einer 18 mm dicken Holzspangipsplatte gegenübergestellt. Insbesondere interessant ist, daß beispielsweise die Schraubenausziehfestigkeit quasi um das Doppelte zugenommen hat und ebenso auch die Nagelauszugsfestigkeit, Eigenschaften, die insbesondere interessant sind für den Fertighausbau, in welchem die Platte besonders günstige Anwendungen erfahren dürfte.

<div align="center">

T a b e l l e

</div>

Holzspangipsplatte

|  | 18 mm GKB | 18 mm Holzspangips-platte |
|---|---|---|
| Biegezugfestigkeit (N/mm²) | 6,7 | 6,5 |
| E-Modul (N/mm²) | 4300 | 6400 |
| Druckfestigkeit (N/mm²) | 9,2 | 13,7 |
| Kugeldruckhärte (Nmm²) | 15,0 | 25,3 |
| Schraubenausziehfestigkeit (N) | 450 | 870 |
| Nagelausziehfestigkeit (N) | 51 | 140 |

Die erfindungsgemäße Holzspangipsplatte kann auf ihrer Außenseite beschichtet sein, und zwar mit $Al_2(SO_4)_3$ und Ettringit, und in Verfolg des erfindungsgemäßen Gedankens ist es auch möglich, statt der Kartonummantelung eine Ummantelung wie an sich bekannt vermittels eines Glasfaservlieses oder eines Glasfasergewebes oder -geleges in Kombination mit einem Vlies vorzunehmen. In Weiterentwicklung dieser Beschichtungsart kann auch so verfahren werden, daß die Glasfaserummantelung die schmalen Ränder freiläßt und nur die beiden großen Flächen der Platte abdeckt, wobei die Glasfaserbahnen, sei es als Vlies, sei es als Gelege oder Gewebe, mit unterschiedlicher Dichte oder Maschenweite ausgeführt sein können und ganz oder teilweise in die breiige Oberfläche der Platte eingedrückt sein können. Es ist auch möglich, mehrere Beschichtungen, wenigstens aber zwei, auf diesen großen Seitenflächen vorzunehmen, von denen eine in den Gipsbrei so weit eingedrückt ist, daß der Gipsbrei mit der nach außen weisenden Oberfläche des Geleges und Gewebes plan verläuft und die zweite Lage, die dann vorzugsweise aus einem Vlies besteht, nur noch mit den durch die Maschen des eingedrückten Geleges oder Gewebes verklebt wird. Das kann in an sich bekannter Weise geschehen.

Durch den erfindungsgemäßen Vorschlag erhält man eine außerordentlich feste, stabile Bauplatte mit praktisch universellen Eigenschaften. Wie bereits erwähnt, besteht eine gewisse Beziehung zwischen Holzspananteil in der Platte und Aufporungsgrad durch Schaumzugabe, mit anderen Worten. bei maximaler Holzspanzugabe wird der Aufporungsgrad praktisch null sein. Da das Raumgewicht der erfindungsgemäßen Holzgipsplatte größer ist als das der herkömmlichen Gipsplatte oder Gipskartonplatte, ergeben sich auch für den Schallschutz bessere Werte.

Es ist natürlich auch möglich. sonstige Zusätze. wie sie bei Gipskartonplatten und Gipsplatten üblich sind, bei der Herstellung der erfindungsgemäßen Holzspangipsplatte anzuwenden. So kann beispielsweise die erfindungsgemäße Platte, sei es als Gipskartonplatte, sei es als Gipsvliesplatte, mit Glasfasermaterialbeschichtung oder als reine Gipsplatte mit einem bekannten Mittel hydrophobiert werden, beispielsweise mit einem Polyalkylwasserstoffsiloxan, das zusammen mit einem Emulgator eingesetzt wird.

Das Holzspangemisch kann aber auch in Verfolg des erfindungsgemäßen Gedankens weiter abgewandelt werden, indem man in ihren Abmessungen noch kleinere, in einer Hammermühle erzeugte Späne zumischt, und zwar in einer Menge, die etwa 30 % der Menge ausmacht, die sich verteilt zu einem Drittel auf die kleinen Hammermühlenspäne und zu zwei Dritteln auf die großen Messermühlenspäne. Eine solche Mischung wirkt sich auch gut aus, wenn ein Teil des Gipses durch Zement ersetzt wird.

In erfindungsgemäßem Verfolg des oben beschriebenen Armierungssystems der Gipsplatten unter Verwendung des besonderen Holzspänegemisches wurde gefunden. daß ein geringer Anteil Glasfasern, wie sie bekannterweise Gipsplatten bereits zugesetzt sind, eine zusätzliche vorteilhafte Steigerung der mechanischen Eigenschaften der Platten geben. Es wird vermutet, daß durch das Zusammenbringen von festen indifferenten Materialteilchen der hier beschriebenen Art und Form eine Verflechtung oder Verfilzung eintritt. in der die Glasfaserchen mit wirken und die Gesamtstruktur günstig beeinflussen.

Die Erfindung wird nun mit Bezug auf die beigefügte Zeichnung, in der Teile des Bauteiles als auch Schnitte durch das Bauteil dargestellt sind, näher erläutert.

Fig. 1a + b   zeigen perspektivische Ansichten der beiden Holzspänearten, wie sie erfindungsgemäß verwendet werden,

Fig. 2   zeigt einen Schnitt durch eine erfindungsgemäße Platte mit Kartonummantelung in der Art einer Gipskartonplatte und

Fig. 3   einen Schnitt durch eine Platte gemäß der Erfindung mit seitlicher Abdeckung aus bahnförmigem Material aus Glasfasern.

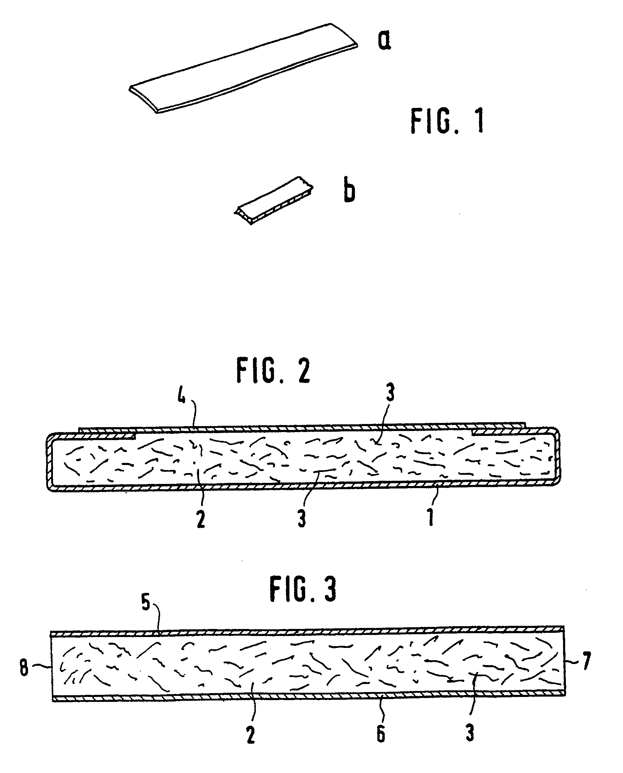

In Fig. 1a ist ein Span hergestellt, der ein großes Längen/Breitenverhältnis hat und in einer Messermühle erzeugt ist. Dadurch hat der Span eine andere Oberflächenstruktur, und auch die Kanten oder Ränder sind im wesentlichen wie die Flächen glatter. Er ist nur fein gerauht. Der in Fig. 1b hingegen dargestellte Span mit einem kleineren Längen/Breitenverhältnis hat aufgrund seiner Herstellung eine andere Oberflächenstruktur. Beide Späne scheinen sich gegenseitig zu beeinflussen und ein verzahntes und verschachteltes System zu ergeben. wobei dieses Ineinandergreifen die mechanischen Eigenschaften besonders günstig entwickelt.

In Fig. 2 ist ein Querschnitt einer Gipskartonplatte dargestellt. deren Kern in erfindungsgemäßer Weise ausgestaltet ist. Die Fertigung erfolgt in üblicher Art auf einer Gipskartonplattenmaschine. Der Ansichtsseitenkarton 1 nimmt den die Holzspäne enthaltenden Gipsbrei auf, der dann schließlich den Karton 2 in der Platte bildet. Die Striche 3 sollen die Holzspäne darstellen, die in geregelter Unregelmäßigkeit die fortschrittlichen Eigenschaften der Platte bedingen.

Das Bezugszeichen 4 bezeichnet den Rückseitenkarton. Der Karton kann, wie in der Beschreibung erwähnt, auch ersetzt sein durch ein Glasseidengelege oder ein Vlies oder dergleichen Material, das genau wie ein Karton auch verarbeitet wird.

In Fig. 3 ist eine andere Art Platte dargestellt. Zunächst handelt es sich um eine Platte mit der erfindungsgemäßen Gipsmischung. die den Kern 3 bildet und die entweder ohne jegliche Beschichung oder Ummantelung ist oder wie in Fig. 3 dargestellt, mit bahnförmigen Abdeckungen 5 auf der einen Seite, beispielsweise unter Verwendung eines Glasfaservlieses und mit Abdeckungen 6 auf der anderen Seite, die der Abdeckung 5 entsprechen kann oder aus einer Kombination unterschiedlicher bahnförmiger Materialien besteht, beispielsweise Vliesgewebe oder -gelege, die ganz oder teilweise oder Kombinationen solcher bahnförmiger Materialien in den Gips eingedrückt sind. Die schmalen Ränder 7 und 8 wären bei dieser Ausgestaltung ohne Abdeckung und bestünden lediglich aus Gips, in dem die Holzspäne teilweise in Erscheinung treten.

Außer dem üblicherweise als Bindemittel verwendeten Gipses kann natürlich auch ein Gemisch von Kalziumsulfathalbhydraten eingesetzt werden, das beispielsweise aus Beta- und Alphahalbhydrat besteht oder aus einem aridisierten Halbhydrat, welches unter Verwendung von Kristalltracht modifizierten Substanzen teilweise zu Alphahalbhydrat rekristallisiert ist.

Für besondere Anwendungszwecke kann auch angeregter Anhydrit zur Herstellung der Platten verwandt werden. Die Holzspäne bestehen vorzugsweise aus Weichholz, z. B. aus Fichten-, Pine- und Pappelholz oder dgl. Es wirkt sich günstig auf die Eigenschaften der Platten aus, wenn man die Holzspäne vorher auf Temperaturen erwärmt, die die flächigen Bestandteile austreiben, aber das Holz noch nicht nachteilig beeinflussen, z. B. auf Temperaturen zwischen 125 und 140 ° C.

In weiterer Entwicklung der Erfindung können die Späne in natürlicher oder vorbehandelter Form mit Kalziumformeat in wäßriger Lösung zum Zwecke der Mineralisierung der Oberflächen behandelt werden. Die feuchten Späne können dann entweder getrocknet oder direkt zum Plattenmaterial verarbeitet werden.

**Patentansprüche**

1. Bauteile beinhaltend Kalziumsulfatbindemittel und Holzspäne insbesondere Platten aus Gips, wie Gipskartonplatten, mit Glasfasermaterial ummantelte oder beschichtete Platten oder Gipsfaserplatten mit den üblichen Zusätzen und einem Gehalt an Holzspänen, dadurch gekennzeichnet, daß dem pulverförmigen Kalziumsulfat bindemittel bis zu

   10 % Holzspäne zugesetzt sind, die sich aus
   30 bis 40 % in einer Messermühle hergestellte flache Späne und
   70 bis 60 % in einer Hammermühle hergestellte flache Späne

   zusammensetzen und die trocken untergemischt sind.

2. Bauteile nach Anspruch 1, dadurch gekennzeichnet, daß der Feuchtigkeitsgehalt der Späne zwischen 2 und 50 Gew.-% liegt und die Flachspäne streifenförmige Gestalt haben und die in der Messermühle erzeugten Späne

   10 bis 40 mm lang,
   1 bis 5 mm breit und
   0,2 bis 0,5 mm dick

   sind und die Hammermühlenspäne kurze und plättchenförmige Gestalt haben und

   0,2 bis 10 mm lang,
   0,2 bis 1 mm breit und
   0,1 bis 0,2 mm dick.

   sind.

3. Bauteile nach Anspruch 1 und 2, dadurch gekennzeichnet, daß das Bauteil im Gipskern (2) außerdem noch kurze Glasfaserchen enthält.

4. Bauteile nach Anspruch 1 bis 3, dadurch gekennzeichnet, daß der Gips des Bauteiles durch bis zu 40 % Zement, vorzugsweise $C_3A$-haltigen Zement, ersetzt ist.

5. Bauteile nach Anspruch 1 bis 4, dadurch gekennzeichnet, daß das Bauteil auf wenigstens einer seiner großen Seitenflächen mit $Al_2(SO_4)_3$ und Ettringit beschichtet ist, und daß das Bauteil hydrophobiert ist.

6. Bauteile nach Anspruch 1 bis 5, dadurch gekennzeichnet, daß das bindemittelbildende pulverförmige Kalziumsulfathalbhydrat aridisiertes Halbhydrat ist, Betahalbhydrat, Alphahalbhydrat oder Gemische dieser Halbhydrate.

7. Bauteile nach Anspruch 1 bis 6, dadurch gekennzeichnet, daß die Holzspäne Weichholzspäne sind und vor der Verarbeitung kurzzeitig auf Temperaturen zwischen 125-140°C erwärmt werden.

8. Bauteile nach Anspruch 1 bis 7, dadurch gekennzeichnet, daß die Holzspäne in der natürlichen oder wärmebehandelten Form oberflächlich mineralisiert werden durch Behandeln mit einer Kalziumformeatlösung.

## Claims

1. Structural elements, containing calcium sulphate binder and wood chips, especially boards of gypsum, such as sandwich-type plasterboards, boards or fibre-reinforced plasterboards jacketed or coated with glass fibre material, comprising the usual admixtures and a content of wood chips, characterized in that there are added to the pulverulent, calcium sulphate binder, up to

   10% wood chips, which are composed of
   30 to 40% of flat chips produced in a chopping mill and
   70 to 60% of flat chips produced in a hammer mill

   and which are dry mixed together.

2. Structural elements according to Claim 1, characterized in that the moisture content of the chips is from 2 to 50% by wt. and the flat chips have a strip-shaped form and the chips produced in the chopping mill are

   10 to 40 mm long,
   1 to 5 mm wide and
   0.2 to 0.5 mm thick

   and the hammer mill chips have a short, platelet-like form and are

   0.2 to 10 mm long,
   0.2 to 1 mm wide and
   0.1 to 0.2 mm thick.

3. Structural elements according to Claims 1 and 2, characterized in that the structural element contains, in the plaster core (2), also short glass fibres.

4. Structural elements according to Claims 1 to 3, characterized in that the gypsum of the structural element is replaced by up to 40% cement, preferably $C_3A$-containing cement.

5. Structural elements according to Claims 1 to 4, characterized in that the structural element is coated, at least on its wide faces, with $Al_2(SO_4)_3$ and Ettringit, and that the structural element is made water repellent.

6. Structural elements according to Claims 1 to 5, characterized in that the binder-forming, pulverulent calcium sulphate hemihydrate is thoroughly dried hemihydrate, beta hemihydrate, alpha hemihydrate or mixtures of these hemihydrates.

7. Structural elements according to Claims 1 to 6, characterized in that the wood chips are softwood chips and, before processing, are temporarily heated to temperatures between 125 and 140°C.

8. Structural elements according to Claims 1 to 7, characterized in that the wood chips, in the natural or heat-treated form, are surface-mineralized by treatment with a calcium formate solution.

## Revendications

1. Eléments constructifs contenant comme liant du sulfate de calcium et des copeaux de bois et, en particulier, plaques de plâtre telles que plaques de carton-plâtre avec plaques enduites ou recouvertes d'un matériau en fibres de verre ou plaques de plâtre avec fibres avec les additifs usuels et une certaine teneur en copeaux de bois, caractérisés en ce qu'on ajoute au sulfate de calcium pulvérulent servant de liant jusqu'à

10% de copeaux de bois, constitués de

30 à 40% de copeaux plats produits dans un broyeur à couteaux et

70 à 60% de copeaux plats produits dans un broyeur à marteaux,

et qu'on les mélange à sec.

2. Eléments constructifs selon la revendication 1, caractérisés en ce que la teneur en humidité des copeaux est comprise entre 2 et 50% en poids et que les copeaux plats ont une forme en bandes et que les copeaux produits au broyeur à couteaux ont

une longueur de 10 à 40 mm,

une largeur de 1 à 5 mm et

une épaisseur de 0,2 à 0,5 mm

et que les copeaux produits au broyeur à marteaux ont une forme courte et en plaquettes et

une longueur de 0,2 à 10 mm,

une largeur de 0,2 à 1 mm et

une épaisseur de 0,1 à 0,2 mm.

3. Eléments constructifs selon les revendications 1 et 2, caractérisés en ce que l'élément constructif contient en outre des fibres de verre courtes dans le noyau de plâtre (2).

4. Eléments constructifs selon les revendications 1 à 3, caractérisés en ce que le plâtre de l'élément constructif est remplacé par du ciment jusqu'à 40%, ce ciment étant de préférence un ciment contenant du $C^3A$.

5. Eléments constructifs selon les revendications 1 à 4, caractérisés en ce que l'élément constructif est recouvert, sur au moins une de ses grandes faces latérales, de $Al_2(SO_4)_3$ et d'Ettringite et que l'élément constructif est rendu hydrophobe.

6. Eléments constructifs selon les revendications 1 à 5, caractérisés en ce que le sulfate de calcium semi-hydraté et pulvérulent formant le liant est du semi-hydrate aridisé, du semi-hydrate bêta, du semi-hydrate alpha ou un mélange de ces semi-hydrates.

7. Eléments constructifs selon les revendications 1 à 6, caractérisés en ce que les copeaux de bois sont des copeaux de bois tendre et qu'ils sont chauffés avant leur mise en oeuvre et pendant une brève période à des températures comprises entre 125 et 140° C.

8. Eléments constructifs selon les revendications 1 à 7, caractérisés en ce que les copeaux de bois sont minéralisés superficiellement sous leur forme naturelle ou traités themiquement au moyen d'un traitement par une solution de form ate de calcium.

FIG. 1

FIG. 2

FIG. 3